# DEMANDE DE BREVET EUROPEEN

(11) **EP 3 422 230 A1**
(43) Date de publication de la demande: **02.01.2019**
(21) Numéro de dépôt: 18179978.4
(22) Date de dépôt: 26.06.2018
(51) Int. Cl.: G06F 21/34, G06Q 20/34, G07F 7/10, G06F 21/35

(54) **SYSTÈME ET PROCÉDÉ DE DÉFINITION D'UN CODE PERSONNEL ASSOCIÉ À UN MICRO-CIRCUIT**

(30) Priorité: 28.06.2017 FR 1755962
(71) Demandeur: IDEMIA France, 92700 Colombes (FR)
(72) Inventeur: GODBERT, Sylvain, 92700 COLOMBES (FR); HAKIM, Amaanie, 92700 COLOMBES (FR); DESPIERRE, Thierry, 92700 COLOMBES (FR); LARONZE GROINE, Antoine, 92700 COLOMBES (FR)
(74) Mandataire: Jacobacci Coralis Harle

(57) **Abrégé**

L'invention concerne un système (100) de définition d'un code personnel (PIN) associé à un micro-circuit (4) comprenant :
- un dispositif électronique (110) avec des moyens de saisie (115) du code personnel et des moyens de chiffrement (111, 112) du code personnel saisi ;
- un terminal informatique (120) avec des moyens de saisie (123) de données personnelles associées à un utilisateur (3) du micro-circuit ;
- un serveur de gestion (130) conçu pour recevoir les données personnelles en association avec des premières données d'association, recevoir le code personnel en association avec des secondes données d'association, et associer les données personnelles et le code personnel sur la base des premières données d'association et des secondes données d'association.

L'invention concerne également un procédé mis en oeuvre par ledit système pour définir le code personnel associé au micro-circuit.

## Description

### DOMAINE TECHNIQUE AUQUEL SE RAPPORTE L'INVENTION

La présente invention concerne de manière générale le domaine de la sécurisation des données attachées à un micro-circuit.

Elle concerne plus particulièrement un système de définition d'un code personnel associé à un micro-circuit.

Elle concerne également un procédé de définition d'un code personnel associé à un micro-circuit.

### ARRIERE-PLAN TECHNOLOGIQUE

Un micro-circuit, aussi appelé plus communément *« puce électronique* », est un composant électronique (circuit intégré, analogique ou numérique) reproduisant une, ou plusieurs, fonctions électroniques plus ou moins complexes, intégrant souvent plusieurs types de composants électroniques de base (micro-contrôleur, registres, mémoires) dans un volume réduit (sur une petite plaque, par exemple au format carte de crédit), rendant le micro-circuit facile à mettre en oeuvre [Source : https://fr.wikipedia.org/wiki/Circuit_intégré].

Un tel micro-circuit est présent sur de nombreux objets, en particulier sur les cartes à puces, par exemple sur les cartes bancaires, ou dans les objets connectés, par exemple les téléphones portables (puce « *SIM* »)*.*

De manière connue, la mise en oeuvre des fonctions électroniques du micro-circuit par un utilisateur du micro-circuit requiert une identification de cet utilisateur au moyen d'un code personnel (« *Personal Identification Number »* en anglais ou code « PIN ») associé au micro-circuit.

Afin de sélectionner ce code personnel, il est connu d'utiliser un boîtier de saisie permettant au futur utilisateur du micro-circuit de saisir, sur ledit boîtier, le code personnel qu'il souhaite, afin que celui-ci soit associé au micro-circuit lorsque celle-ci sera fabriquée puis remis à l'utilisateur (le plus souvent inséré dans un support tel qu'une carte par exemple).

Généralement, l'utilisation d'un tel boîtier requiert sa connexion à un terminal informatique d'un réseau sécurisé, par exemple dans lequel des informations personnelles (nom, prénom, numéro de compte ou de téléphone, *etc...*) sur l'utilisateur pourraient être enregistrées.

Une telle utilisation est par exemple décrite dans le document WO 2009/025729. Dans ce document, aucune association d'un code PIN avec des données personnelles n'est réellement souhaitée, nécessaire ou même réalisée car le boîtier de saisie (dispositif 260) communique directement avec le terminal informatique (module 250), ce terminal informatique réalisant directement l'association du code PIN avec les données personnelles.

Cependant, une telle solution pose des problèmes d'implémentation dans la mesure où les politiques de sécurité informatique interdisent le plus souvent les connexions des terminaux informatiques d'un réseau sécurisé à des dispositifs externes *via* des interfaces standards (ports USB ou liaison Bluetooth par exemple).

### OBJET DE L'INVENTION

Afin de remédier à l'inconvénient précité de l'état de la technique, la présente invention propose un système de définition d'un code personnel associé à un micro-circuit qui ne requiert aucune connexion avec un terminal informatique d'un réseau sécurisé.

Plus particulièrement, on propose selon l'invention un système de définition d'un code personnel associé à un micro-circuit comprenant :
- un dispositif électronique avec des moyens de saisie du code personnel et des moyens de chiffrement du code personnel saisi ;
- un terminal informatique avec des moyens de saisie de données personnelles associées à un utilisateur du micro-circuit ; et
- un serveur de gestion conçu pour :
   - recevoir les données personnelles en association avec des premières données d'association ;
   - recevoir le code personnel en association avec des secondes données d'association ; et
   - associer ledit code personnel et lesdites données personnelles sur la base des premières données d'association et des secondes données d'association.

Ainsi, grâce au serveur de gestion qui associe ledit code personnel et lesdites données personnelles sur la base des premières données d'association et des secondes données d'association, il n'est plus nécessaire de connecter le dispositif électronique pour la saisie du code au terminal informatique du réseau sécurisé.

En pratique, le dispositif électronique et le terminal informatique sont séparés l'un de l'autre, c'est-à-dire qu'il n'existe aucun moyen de communication entre le dispositif et le terminal, de sorte que le serveur de gestion reçoit :
- les données personnelles en association avec les premières données d'association en provenance du terminal informatique; et
- le code PIN en association avec les deuxièmes données d'association en provenance du dispositif électronique.

En effet, le dispositif électronique et le terminal informatique sont reliés au serveur de gestion par deux canaux de communication disjoints. C'est justement parce que ces deux canaux sont disjoints qu'il est nécessaire d'associer les informations personnelles en provenance du terminal informatique et le code personnel saisi sur le dispositif électronique.

En d'autres termes, le dispositif électronique et le terminal informatique de l'invention sont séparés l'un de l'autre de sorte que le code personnel et les données personnelles ne circulent jamais ensemble sur le réseau informatique. C'est pourquoi le système de l'invention a besoin d'un serveur de gestion qui reçoive séparément le code personnel et les données personnelles, chacun avec des données d'association.

De préférence, le système de l'invention, comprend un module de sécurité mémorisant une clé cryptographique, lesdits moyens de chiffrement étant conçus pour chiffrer le code personnel saisi au moyen de ladite clé cryptographique.

Avantageusement, cette clé cryptographique est une clé publique de chiffrement d'une paire de clés associée à une méthode de chiffrement asymétrique, par exemple une méthode de type RSA.

Dans un mode de réalisation particulier, le module de sécurité est alors conçu pour transmettre ladite clé cryptographique au dispositif électronique *via* une liaison sans fil courte portée.

De préférence, ladite liaison sans fil présente une portée inférieure à 1 mètre, mieux inférieure à 50 centimètres, idéalement inférieure à 10 centimètres.

Ladite liaison sans fil courte portée peut être par exemple une liaison de type Bluetooth ou Bluetooth Basse Consommation (« *Bluetooth Low Energy »* ou BLE), RFID, LiFi, infrarouge ou NFC.

Dans un mode préféré de réalisation de l'invention, le module de sécurité mémorise une clé privée et est conçu pour produire une signature numérique du code personnel chiffré et des informations associées à la saisie du code PIN au moyen de ladite clé privée.

Avantageusement, cette clé privée est une clé privée d'intégrité d'une paire de clés associée à une autre méthode de chiffrement asymétrique, par exemple une méthode de type RSA.

D'autres caractéristiques non limitatives et avantageuses du système de définition conforme à l'invention sont les suivantes :
- ledit système comprend un serveur additionnel conçu pour recevoir le code personnel chiffré en provenance du dispositif électronique et pour transmettre le code personnel au serveur de gestion ;
- les moyens de chiffrement étant conçus pour chiffrer le code personnel saisi au moyen d'un premier algorithme cryptographique, ledit serveur additionnel est conçu pour déchiffrer le code personnel chiffré et pour chiffrer le code personnel au moyen d'un second algorithme cryptographique distinct du premier algorithme cryptographique ;
- ledit système comprend une machine de production de micro-circuit conçue pour produire ledit micro-circuit, et le serveur de gestion est conçu pour fournir, à la machine de production de micro-circuit, les données personnelles et le code personnel associés ;
- la machine de production de micro-circuit est conçue pour commander la mémorisation du code personnel dans ledit micro-circuit ;
- le dispositif électronique est une tablette tactile ou bien un smartphone ;
- ledit système comprend en outre un serveur intermédiaire s'intercalant entre le terminal informatique et le serveur de gestion, ledit serveur intermédiaire étant conçu pour recevoir du terminal informatique les données personnelles associées à l'utilisateur ; enrichir les données personnelles avec des données supplémentaires; et transmettre les données personnelles enrichies au serveur de gestion.

L'invention propose également un procédé de définition d'un code personnel associé à un micro-circuit comprenant :
- une première étape de saisie du code personnel sur un dispositif électronique ;
- une étape de chiffrement dudit code personnel saisi par le dispositif électronique ;
- une deuxième étape de saisie, sur un terminal informatique, de données personnelles associées à un utilisateur du micro-circuit ;
- une première étape de réception des données personnelles en association avec des premières données d'association par un serveur de gestion ;
- une deuxième étape de réception du code personnel en association avec des secondes données d'association par le serveur de gestion ; et
- une étape d'association, par le serveur de gestion, du code personnel et des données personnelles sur la base des premières données d'association et des secondes données d'association.

De préférence, le procédé de définition comprend, entre l'étape de chiffrement et l'étape de saisie sur le terminal informatique une étape de création et de signature d'une demande de code PIN comprenant le code PIN chiffré et une signature numérique de ce code PIN chiffré et des secondes données d'association.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un exemple de réalisation d'un système de définition d'un code personnel selon l'invention ;
- la figure 2 est un logigramme schématique d'un exemple de mise en oeuvre d'un procédé de définition d'un code personnel selon l'invention.

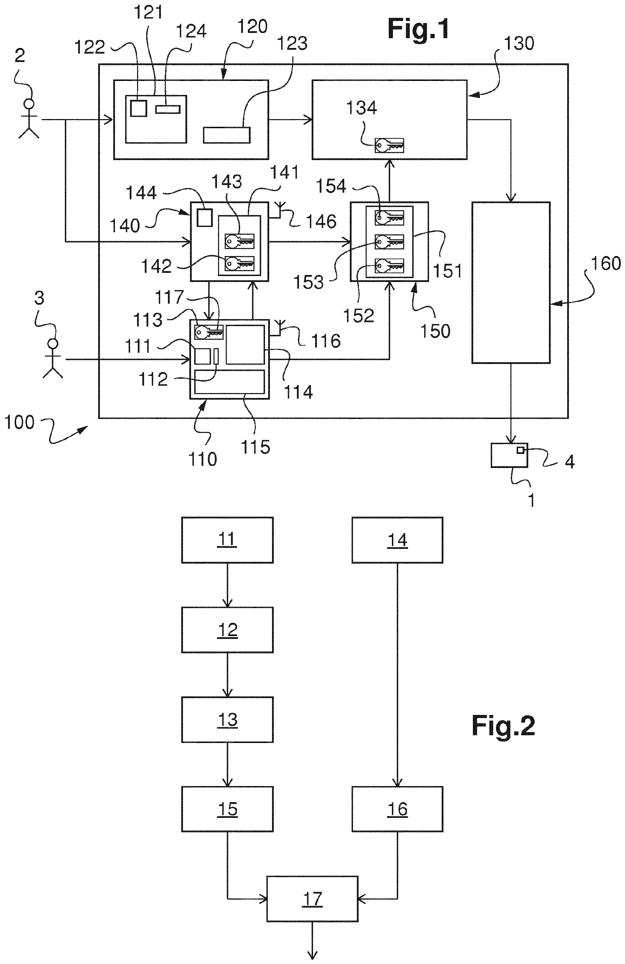

Afin de rendre la description plus concrète et plus facile à appréhender pour le lecteur, on décrira ci-après en référence aux figures 1 et 2 un exemple particulier de mise en oeuvre de l'invention dans le domaine bancaire, en particulier pour la sélection du code personnel (ci-après désigné « code PIN ») d'un micro-circuit 4 d'une carte bancaire 1 (voir figure 1). Ce micro-circuit 4 comprend des unités de mémorisation (non représentées) dans lesquelles ce code PIN peut être stocké.

Toutefois, le système et le procédé de définition du code personnel décrits ci-après ne sont nullement limités à ce domaine et pourraient tout aussi bien être mis en oeuvre ou utilisés dans un autre domaine technique, par exemple dans la téléphonie mobile avec le code PIN du micro-circuit d'une carte de type SIM pour un téléphone mobile.

### Dispositif

Sur la figure 1, on a représenté un mode de réalisation particulier d'un système 100 selon l'invention, grâce auquel un individu 3, assisté ici par un opérateur 2 d'une agence bancaire, peut choisir lui-même le code PIN de la carte bancaire 1 qu'il souhaite commander à sa banque.

Selon l'invention, ce système 100 comprend :
- un dispositif électronique 110 ;
- un terminal informatique 120 ; et
- un serveur de gestion, ici un serveur de gestion de cartes 130.

On décrira ci-après, en référence à la figure 1, ces différents éléments 110, 120, 130 du système 100, ainsi que d'autres éléments additionnels 140, 150, 160 qui sont particulièrement avantageux pour le fonctionnement du système 100 lorsque le micro-circuit à personnaliser est celui d'une carte bancaire :
- un module de sécurité 140 ;
- un serveur additionnel 150 ; et
- une machine de production de carte 160.

### Dispositif électronique 110

Dans le mode de réalisation décrit ici, le dispositif électronique est une tablette 110 tactile comprenant notamment un micro-processeur 111, une mémoire morte 112, une mémoire vive 113, et différentes interfaces d'entrée et de sortie, comme un écran 114, un clavier 115 et une unité de communication sans fil courte portée, ici un système d'antenne 116 de type RFID.

En variante, le dispositif électronique pourrait être un smartphone ou bien un ordinateur portable.

En variante encore, le système d'antenne du dispositif électronique est de type NFC.

On verra dans la suite de la description que le clavier 115 (sous la forme d'un clavier tactile s'affichant sur l'écran 114 de la tablette 110) permet à l'utilisateur 3 (c'est-à-dire ici le porteur de la carte) de saisir le code PIN qu'il souhaite, celui-ci étant alors stockée dans la mémoire vive 113 de la tablette 110.

Le micro-processeur 111 de la tablette 110 est apte à exécuter différents programmes informatiques qui sont mémorisés dans la mémoire morte 112.

Avantageusement, ce micro-processeur 111 peut exécuter des algorithmes de cryptage et/ou de décryptage de données. Il est en particulier conçu pour chiffrer, au moyen d'un premier algorithme cryptographique, le code PIN choisi par l'individu 3 et saisi sur le clavier 115 de la tablette 110 du système 100.

De préférence, ce premier algorithme cryptographique est un algorithme de chiffrement asymétrique à clé publique de type RSA.

Par ailleurs, la mémoire vive 113 est adaptée à stocker une clé cryptographique, et plus précisément un exemplaire de copie 117 d'une clé publique d'une paire de clés de chiffrement, cet exemplaire de copie 117 de la clé publique de chiffrement étant destiné à être utilisé par le micro-processeur 111 pour chiffrer le code PIN saisi par l'utilisateur 3 (c'est-à-dire ici le porteur de la carte) sur le clavier 115.

On verra dans la suite de la description que la clé publique de chiffrement est ici fournie par le module de sécurité 140.

Dans une variante de réalisation, le code PIN saisi et l'exemplaire de copie de la clé publique de chiffrement sont stockés dans une unité de stockage de la tablette, par exemple une mémoire EEPROM ou un disque dur de type Flash (« *SSD disk* » en anglais).

Le système d'antenne 116 est quant à lui destiné à recevoir ou à transmettre, *via* une liaison sans fil courte portée, des données avec une autre unité de communication. Ces données peuvent être, par exemple, l'exemplaire de copie 117 de la clé publique de chiffrement, le code PIN chiffré par ladite clé publique ou non, ou bien tout autre message sous forme numérique.

La tablette 110 comporte également des moyens pour communiquer avec le serveur additionnel 150 (voir la description de celui-ci ci-après). Ces moyens peuvent par exemple comprendre une unité de communication sans fil longue portée, telle qu'un système WiFi.

### Terminal informatique 120

Le terminal informatique peut être par exemple un ordinateur 120 de bureau, par exemple l'ordinateur de l'opérateur 2 du guichet de l'agence bancaire.

Dans d'autres modes de réalisation, le terminal informatique peut être un poste informatique quelconque (i.e. n'appartenant à personne en particulier) qui est dédié à la sélection de codes PIN dans l'agence bancaire en question.

Cet ordinateur 120 comprend notamment une unité centrale 121 avec un autre micro-processeur 122, ainsi qu'un autre clavier 123 (par exemple sous la forme d'un clavier physique relié à l'unité centrale 121 de l'ordinateur 120) permettant à l'opérateur 2 de saisir différentes données destinées à être placées dans une mémoire 124 de l'ordinateur 120.

Comme on le verra dans la description du procédé de définition en référence à la figure 2, les différentes données saisies sur l'ordinateur 120 par l'opérateur 2 peuvent notamment comprendre des données personnelles qui sont associées à l'individu 3, comme par exemple :
- son nom et son prénom ;
- le numéro de compte bancaire attaché à ladite carte 1 ; et
- son adresse postale ;
- son numéro de téléphone.

### Module de sécurité 140

Le module de sécurité 140 est ici une carte à microcircuit sécurisée, telle qu'un jeton d'identification (« *token »).*

En substance, le module de sécurité 140 est un dispositif sécurisé (*« container »*) dont les fonctions cryptographiques (clés de chiffrement ou de déchiffrement, clés d'intégrité pour signature numérique) sont accessibles soit directement, soit moyennant une donnée d'authentification. Cette donnée d'identification peut être par exemple : un autre code PIN (préalablement choisi ou non), ou une information biométrique de l'opérateur (empreinte digitale, reconnaissance faciale ou oculaire).

Ce module de sécurité sert ici de carte personnelle de sécurité 140 pour l'opérateur 2. Elle permet par exemple à celui-ci de s'identifier sur le réseau informatique sécurisé de l'agence bancaire de l'opérateur 2, par exemple sur son ordinateur 120 de bureau. Elle permet également de lancer une application spécifique destinée à la saisie du code PIN sur la tablette 110.

Avantageusement, la carte personnelle de sécurité 140 est ici une carte à puce 144 protégée par son code PIN (autre code PIN) qui est connu de l'opérateur 2 pour la faire fonctionner.

Cette carte personnelle de sécurité 140 est de plus adaptée à mémoriser dans une unité de mémorisation 141 des données numériques, en particulier ici un exemplaire original 142 de la clé publique de chiffrement qui est utilisée par la tablette 110 pour chiffrer le code PIN saisi par l'individu 3.

De préférence, la carte personnelle de sécurité 140 comprend une autre unité de communication sans fil courte portée (symbolisée ici par l'antenne 146), ici de type RFID, pour communiquer avec la tablette 110 *via* son système d'antenne 116.

En particulier, la carte personnelle de sécurité 140 est conçue pour transmettre à la tablette 110 l'exemplaire de copie 117 de la clé publique de chiffrement *via* la liaison sans fil courte portée existant entre l'antenne 116 de la tablette 110 et l'antenne 146 de la carte personnelle de sécurité 140.

Enfin, la carte personnelle de sécurité 140 mémorise dans l'unité de mémorisation 141 une deuxième clé cryptographique, ici une clé privée d'intégrité 143 utilisée pour produire une signature numérique du code PIN chiffré et de secondes informations associées à la saisie du code PIN (voir description du procédé de l'invention ci-après).

### Serveur additionnel 150

Le serveur additionnel 150 est conçu pour :
- recevoir le code PIN chiffré en provenance de la tablette 110 ; et
- transmettre le code PIN au serveur de gestion de cartes 130.

De préférence, le serveur additionnel 150 est conçu pour déchiffrer le code PIN chiffré par la tablette 110 au moyen de la clé publique de chiffrement. À cet effet, le serveur additionnel 150 possède une mémoire 151 dans laquelle est stockée la clé privée de déchiffrement 152 associée à cette clé publique.

Le serveur additionnel 150 est également conçu pour chiffrer à nouveau le code PIN, déchiffré précédemment au moyen du premier algorithme, au moyen d'un second algorithme cryptographique distinct du premier algorithme cryptographique.

De préférence, ce second algorithme cryptographique est un algorithme de chiffrement symétrique à clé secrète, par exemple de type Triple-DES ou AES.

Pour cela, un premier exemplaire 154 de cette clé secrète est stocké dans la mémoire 151 du serveur additionnel 150, tandis qu'un second exemplaire 134 de cette même clé secrète est stocké sur le serveur de gestion de cartes 130 (voir ci-après).

Enfin, le serveur additionnel 150 comprend une autre clé cryptographique, qui est la clé publique d'intégrité 153 associée de la paire de clés d'intégrité 143, 153. Cette clé publique d'intégrité 153 permet au serveur additionnel 150 de vérifier l'intégrité et l'authenticité du code PIN chiffré et des secondes informations associées à la saisie du code PIN.

L'avantage d'utiliser un serveur additionnel 150, inséré entre, d'un côté, la tablette 110 et l'ordinateur 120, et, de l'autre côté, le serveur de gestion de cartes 130 est que la gestion des diverses infrastructures informatiques de chiffrement mises en place dans différentes agences bancaires est réalisée par ce serveur additionnel 150, dont l'architecture est simple et le coût faible par rapport au serveur de gestion de cartes 130.

### Serveur de gestion de cartes 130

Afin de bien comprendre en quoi consiste le serveur de gestion de cartes 130, on va maintenant décrire en référence à la figure 2 un exemple de mise en oeuvre d'un procédé de définition du code PIN selon l'invention.

### Procédé

### Première étape (bloc 11 de la figure 2) : Saisie par l'individu 3 du code PIN sur la tablette 110

Lors de cette première étape, l'opérateur 2 commence le processus de commande de la future carte 1 destinée à l'individu 3, celui-ci souhaitant donc choisir lui-même son code PIN au moyen de la tablette 110.

Tout d'abord, l'opérateur 2 s'identifie sur la tablette 110 au moyen de sa carte personnelle de sécurité 140 et lance une application destinée à la saisie du code PIN.

Lors de cette opération, la clé publique de chiffrement (en réalité l'exemplaire de copie 117) est transmise *via* la liaison sans fil courte portée entre la tablette 110 et la carte personnelle de sécurité 140.

Dans une variante, il est prévu que la clé publique de chiffrement soit préalablement stockée dans une unité de stockage (par exemple le disque dur) du dispositif électronique.

Ensuite, l'opérateur 2 donne la tablette 110 à l'individu 3 afin que celui-ci sélectionne son code PIN. En pratique, une première page s'affiche sur la tablette 110 demandant à l'individu 3 de saisir une première fois le code PIN qu'il souhaite (par ex. un code numérique à quatre chiffres) sur le clavier 115. Après la première saisie du code PIN, celui-ci est par exemple enregistré dans la mémoire vive de la tablette 110.

Une deuxième page s'affiche alors sur la tablette 110 invitant l'individu 3 à saisir une seconde fois le code PIN souhaité. Une fois saisi, sa valeur est alors comparée à celle du code PIN mis en mémoire précédemment.

Si les deux valeurs sont différentes, l'opération de saisie recommence depuis le début (affichage de la 1^{ère} page et invitation à ressaisir un code PIN).

Si les deux valeurs sont identiques, alors une nouvelle page s'affiche sur la tablette 110 indiquant à l'individu 3 que l'opération de saisie s'est terminée correctement.

### Deuxième étape (bloc 12) : Chiffrement par la tablette 10 du code PIN saisi par l'individu 3

Après la deuxième saisie réussie, le code PIN choisi par l'individu 3 est traité par le micro-processeur 111 de la tablette 110 de manière à crypter ce code PIN selon le premier algorithme cryptographique (ici de type RSA) en utilisant l'exemplaire de copie 117 de la clé publique de chiffrement fourni par la carte personnelle de sécurité 140 à la tablette 110.

Une référence (« *PIN_Id* ») de demande de code PIN est également générée par le micro-processeur 111 de la tablette 110.

Avantageusement, cette référence (« *PIN_Id* ») de demande de code PIN est affichée sur l'écran 114 de la tablette 110.

L'individu 3 rend alors la tablette 110 à l'opérateur 2.

On passe ensuite à l'étape suivante.

### Troisième étape (bloc 13) : Création d'une demande de code PIN (« PIN Request ») et signature de celle-ci

Une fois dans ses mains, l'opérateur 2 s'identifie à nouveau sur la tablette 110 au moyen de sa carte personnelle de sécurité 140. Cette identification est réalisée au moyen de la liaison sans fil courte portée entre la tablette 110 et la carte personnelle de sécurité 140 comme à la première étape (11).

Si la référence (« *PIN_Id* ») de demande de code PIN était affichée sur l'écran 114 de la tablette 110, l'opérateur 2 note cette référence.

De préférence, on peut prévoir une double identification de l'opérateur 2 sur la tablette 110. Dans ce cas, il est demandé à l'opérateur 2 de saisir sur la tablette 110 l'autre code PIN de la carte personnelle de sécurité 140.

Lors de cette deuxième étape, une référence (« *Security_Card Id* ») de la carte personnelle de sécurité 140 utilisée pour la saisie et le chiffrement du code PIN sur la tablette 110 est transmise *via* la liaison sans fil courte portée.

À l'issue de cette étape, la demande de code PIN (« *PIN Request »)* est émise par la tablette 110 en direction du serveur additionnel 150. Cette demande de code PIN comprend notamment :
- le code PIN chiffré par la tablette 110 selon le premier algorithme cryptographique au moyen de la clé publique de chiffrement ; et
- des secondes données d'association avec le code PIN qui incluent notamment :
   - la référence (« *PIN_Id* ») de demande de code PIN générée par le micro-processeur 111 de la tablette 110 ;
   - une référence de la tablette 110 (« *Device Id* ») qui l'identifie parmi d'autres tablettes (par exemple utilisées dans la même agence) ;
   - la référence (« *Security_Card_Id* ») de la carte personnelle de sécurité 140 (voir 1^{ère} étape) ;
   - une donnée d'horodatage (« *PIN_Timestamp* ») permettant de préciser quand la demande de code PIN a été effectuée ;
   - une signature numérique de toutes ces données qui est calculée par la carte personnelle de sécurité 140 grâce à la clé privée d'intégrité 143 mémorisée dans l'unité de mémorisation 141.

Cette demande de code PIN (« *PIN Request* ») est alors transmise au serveur additionnel 150.

À la réception de la demande de code PIN, le serveur additionnel 150 réalise différentes opérations numériques.

Il déchiffre d'une part, grâce à la clé privée de déchiffrement, le code PIN chiffré par la tablette 110 au moyen du premier algorithme cryptographique (de type RSA par exemple) avec la clé publique de chiffrement.

Il vérifie d'autre part, grâce à la clé publique d'intégrité et à la signature numérique des données de la demande de code PIN, que la demande de code PIN n'a pas été modifiée.

Enfin, il remet en forme la demande de code PIN en y incluant :
- le code PIN re-chiffré au moyen du second algorithme cryptographique (triple-DES ou AES) avec la clé secrète de chiffrement ; et
- les secondes données d'association avec le code PIN (référence unique de la demande de code PIN, référence de la tablette 110, référence de la carte personnelle de sécurité 140, et donnée d'horodatage).

Cette demande de code PIN est alors envoyée par le serveur additionnel 150 en direction du serveur de gestion de cartes 130.

### Quatrième étape (bloc 14) : Saisie par l'opérateur 2 sur son ordinateur de bureau 120 de données personnelles associées à l'individu 3

On notera tout d'abord que cette troisième étape peut avoir lieu avant ou en même temps que la première et/ou la deuxième étape.

Lors de cette étape, l'opérateur 2 commande le terminal informatique 120 pour qu'il émette une demande de carte (« *Card Request* ») en direction du serveur de gestion de cartes 130.

Cette demande de carte comprend en particulier :
- des données personnelles associées à l'individu 3 qui sont saisies par l'opérateur 2 sur le terminal informatique 120 (voir plus haut) ; et
- une ou plusieurs premières données d'association avec ces données personnelles qui incluent notamment :
   - la référence de la tablette 110 ;
   - la référence de la carte personnelle de sécurité 140 ;
   - un identifiant (par exemple le nom) de l'opérateur 2 ;
   - une donnée d'horodatage (« *Card_Timestamp* ») permettant de préciser quand la demande de carte a été effectuée ;
   - la référence unique (« *PIN_Id* ») de la demande de code PIN.

Dans un mode de réalisation préféré, la référence unique (« *PIN_Request »*) de la demande de code PIN, qui a été noté par l'opérateur 2 précédemment, est saisie par l'opérateur 2 sur le terminal informatique 120 en même que la saisie des données personnelles associées à l'individu 2.

En variante, la référence de la demande de code PIN peut être généré par le serveur de gestion de carte, affichée sur le terminal informatique, puis saisie sur celui-ci par l'opérateur.

À l'issue des quatre premières étapes, deux demandes ont donc été envoyées au serveur de gestion de cartes 130 :
- la demande de carte (*« Card request »*) en provenance de l'ordinateur 120 ; et
- la demande de code PIN (*« PIN request* ») en provenance du serveur additionnel 150.

La demande de carte comporte les données personnelles sur l'individu 3 et les premières données d'association avec ces données personnelles.

Comme décrit plus haut, la demande de code PIN (« *PIN Request* ») comporte le code PIN, sous sa forme chiffrée selon le deuxième algorithme cryptographique, et les secondes données d'association avec ce code PIN.

Selon l'invention, le serveur de gestion de cartes 130 est conçu pour :
- recevoir les données personnelles en association avec les premières données d'association (cinquième étape, bloc 16 de la figure 2) ;
- recevoir le code PIN en association avec les secondes données d'association (sixième étape, bloc 15 de la figure 2) ; et
- associer les données personnelles et le code PIN sur la base des premières données d'association et des secondes données d'association (septième étape, bloc 17 de la figure 2).

Après réception de la demande de code PIN, le serveur de gestion de cartes 130 déchiffre, grâce à la clé secrète de chiffrement, le code PIN chiffré au moyen du deuxième algorithme cryptographique par le serveur additionnel 150 grâce à cette même clé secrète.

Lors de la septième étape, pour associer les données personnelles et le code PIN, le serveur de gestion de cartes 130 compare les premières données d'association et les secondes données d'association reçues respectivement avec la demande de carte (*Card_Request*) et la demande de code PIN (*PIN_Request*)*.*

Si ces premières et secondes données correspondent, le serveur de gestion de cartes 130 en déduit que la demande de carte et la demande de code PIN doivent être associées.

En pratique, toutes les données exploitables pour l'association ne sont pas forcément utilisées. Par exemple, l'association peut se faire sur la base de la seule référence (*PIN_Request*) de demande de carte. Dans ce cas, la référence de demande de carte présente dans les premières données d'association doit correspondre à la référence de demande de carte présente dans les secondes données d'association.

En d'autres termes, chaque donnée exploitée pour l'association du code PIN avec les données personnelles doit être présente avec la même valeur dans les premières et secondes données d'association.

Enfin, le serveur de gestion de cartes 130 génère une demande de carte avec sélection du code PIN (« *Card Request with PIN* ») comportant ensemble les données personnelles liées à l'individu 2 et le code PIN (de préférence chiffré) choisi par l'individu 3 et qui doit être enregistré dans la carte 1 avec les données personnelles.

### Machine de production de cartes 160

Comme représenté schématiquement sur la figure 1, le système 100 comporte de préférence une machine de production de carte 160 adaptée pour la fabrication de la carte 1 avec le code PIN choisi par l'individu 3.

À cet effet, le serveur de gestion de cartes 130 du système 100 est conçu pour fournir directement ou indirectement, par exemple *via* un autre système informatique, à cette machine de production de carte 160, le code PIN et les données personnelles associés précédemment par le serveur de gestion de cartes 130 (voir septième étape ci-dessus).

Avantageusement, lorsqu'un autre système informatique s'interpose entre le serveur de gestion de cartes 130 et la machine de production de carte 160, cet autre système informatique réalise les traitements suivants sur la demande de carte avec sélection du code PIN :
- préparation des données EMV (« *Europay Mastercard Visa »,* norme ISO/IEC 7816-3) ;
- création des APDUs (*« Application Protocol Data Unit »* : protocole d'échange de message entre une carte à puce et un lecteur de carte à puce, norme ISO/IEC 7816-4) pour personnaliser la puce de la carte ;
- affichage des cartes en attente de personnalisation ;
- possibilité de re-personnaliser une carte en cas de défaut d'impression ;
- suivi des stocks de cartes non-personnalisés.

La machine de production de carte 160 est avantageusement conçue pour commander la mémorisation du code PIN dans l'unité de mémorisation 4 de la carte 1.

Après fabrication, l'individu 3 récupère sa carte 1 avec le code PIN associé qu'il a choisi.

La présente invention n'est nullement limitée au mode de réalisation décrit et représenté, mais l'homme du métier saura y apporter toute variante conforme à son esprit.

On pourrait ainsi prévoir que le système de définition comporte, en plus du serveur de gestion et du terminal informatique, un serveur intermédiaire s'intercalant/s'interposant entre le terminal informatique et le serveur de gestion. Dans ce mode de réalisation, le serveur intermédiaire aurait alors pour fonction d'enrichir les données personnelles reçues du terminal informatique, par exemple en ajoutant aux données personnelles, des données relatives aux comptes de l'utilisateur, les données personnelles enrichies étant alors transmises au serveur de gestion en association avec les premières données d'association.

## Revendications

1. Système (100) de définition d'un code personnel (PIN) associé à un micro-circuit (4) comprenant :
- un dispositif électronique (110) avec des moyens de saisie (115) du code personnel (PIN) et des moyens de chiffrement (111, 112) du code personnel (PIN) saisi ;
- un terminal informatique (120) avec des moyens de saisie (123) de données personnelles associées à un utilisateur (3) dudit micro-circuit (4) ;
- un serveur de gestion (130) conçu pour :
- recevoir les données personnelles en association avec des premières données d'association ;
- recevoir le code personnel (PIN) en association avec des secondes données d'association ; et
- associer les données personnelles et le code personnel (PIN) sur la base des premières données d'association et des secondes données d'association.

2. Système (100) selon la revendication 1, comprenant un module de sécurité (140) mémorisant une clé cryptographique (142), lesdits moyens de chiffrement (111, 112) étant conçus pour chiffrer le code personnel (PIN) saisi au moyen de ladite clé cryptographique (117).

3. Système (100) selon la revendication 2, dans lequel le module de sécurité (140) est conçu pour transmettre ladite clé cryptographique (142) au dispositif électronique (110) *via* une liaison sans fil courte portée (116, 146).

4. Système (100) selon la revendication 2 ou 3, dans lequel, le module de sécurité (140) mémorisant une clé privée (143) d'intégrité, lesdits moyens de chiffrement (111, 112) sont conçus pour produire une demande de code PIN comprenant une signature numérique générée au moyen de ladite clé privée (143) du code personnel (PIN) et des secondes données d'association.

5. Système (100) selon l'une des revendications 1 à 4, comprenant un serveur additionnel (150) conçu pour recevoir le code personnel (PIN) chiffré en provenance du dispositif électronique (110) et pour transmettre le code personnel (PIN) au serveur de gestion (130).

6. Système (100) selon la revendication 5, dans lequel, les moyens de chiffrement (111, 112) étant conçus pour chiffrer le code personnel (PIN) saisi au moyen d'un premier algorithme cryptographique, ledit serveur additionnel (150) est conçu pour déchiffrer le code personnel (PIN) chiffré et pour chiffrer le code personnel (PIN) au moyen d'un second algorithme cryptographique distinct du premier algorithme cryptographique.

7. Système (100) selon l'une des revendications 1 à 6, comprenant une machine de production de micro-circuit (160) conçue pour produire ledit micro-circuit (4), dans lequel le serveur de gestion (130) est conçu pour fournir, à la machine de production de micro-circuit (160), le code personnel (PIN) et les données personnelles associées.

8. Système (100) selon la revendication 7, dans lequel la machine de production de micro-circuit (160) est conçue pour commander la mémorisation du code personnel (PIN) dans ledit micro-circuit (4).

9. Système (100) selon l'une des revendications 1 à 8, dans lequel le dispositif électronique (110) est une tablette tactile.

10. Système selon l'une des revendications 1 à 9, comprenant en outre un serveur intermédiaire conçu pour :
- recevoir du terminal informatique les données personnelles associées à l'utilisateur ;
- enrichir les données personnelles avec des données supplémentaires; et
- transmettre les données personnelles enrichies au serveur de gestion.

11. Procédé de définition d'un code personnel (PIN) associé à un micro-circuit (4) comprenant les étapes suivantes :
- saisie (11) du code personnel (PIN) sur un dispositif électronique (110) ;
- chiffrement (12) du code personnel (PIN) saisi par le dispositif électronique (110) ;
- saisie (14), sur un terminal informatique (120), de données personnelles associées à un utilisateur (3) du micro-circuit (4) ;
- réception (16) des données personnelles en association avec des premières données d'association par un serveur de gestion (130) ;
- réception (15) du code personnel (PIN) en association avec des secondes données d'association par le serveur de gestion (130) ; et
- association (17), par le serveur de gestion (130), des données personnelles et du code personnel (PIN) sur la base des premières données d'association et des secondes données d'association.

12. Procédé selon la revendication 11 comprenant, entre l'étape de chiffrement (12) et l'étape de saisie (14) sur le terminal informatique (120), une étape de création et de signature (13) d'une demande de code PIN comprenant le code PIN chiffré et une signature numérique de ce code PIN chiffré et des secondes données d'association.
